# EUROPÄISCHE PATENTSCHRIFT

(11) **EP 2 485 893 B1**
(45) Veröffentlichungstag und Bekanntmachung des Hinweises auf die Patenterteilung: **15.01.2014**
(21) Anmeldenummer: 10763175.6
(22) Anmeldetag: 04.10.2010
(51) Int. Cl.: B32B 17/10, G02B 27/01, C08K 5/00, C08L 29/14

(54) **VERBUNDGLASSCHEIBE ALS HEAD-UP-DISPLAY**
LAMINATED GLAZING FOR HEAD-UP DISPLAY SYSTEM
VITRAGE FEUILELTÉ POUR SYSTÈME DE VISUALISATION TÊTE HAUTE

(30) Priorität: 05.10.2009 DE 102009044181
(43) Veröffentlichungstag der Anmeldung: 15.08.2012
(73) Patentinhaber: Saint-Gobain Glass France, 92400 Courbevoie (FR)
(72) Erfinder: LABROT, Michael Dr., 52072 Aachen (DE); RODRIGUEZ GONZÁLES, Luz Dr., 41464 Neuss (DE); BRENIAUX, Marie-Hélène, 68100 Mulhouse (FR)
(74) Vertreter: Lendvai, Tomas
(86) Internationale Anmeldenummer: PCT/EP2010/064734
(87) Internationale Veröffentlichungsnummer: WO 2011/042384

(56) Entgegenhaltungen:
- WO-A2-2008/132368
- DE-A1- 4 024 330
- FR-A1- 2 929 017
- US-A1- 2006 171 007
- M. DAY, D.M. WILES: "Photochemical Degradation of Poly(ethylene Terephthalate). I Irradiation Experiments with the Xenon and Carbon Arc", JOURNAL OF APPLIED POLYMER SCIENCE, Bd. 16 (1972), 31. Dezember 1972 (1972-12-31), Seiten 175-189, XP002565384,

## Beschreibung

Die Erfindung betrifft eine Verbundglasscheibe, ein Verfahren zur Herstellung der Verbundglasscheibe und deren Verwendung als Head-Up-Display.

Head-Up-Displays sind in der Luftfahrt weit verbreitet. Die im direkten Sichtfeld der Piloten montierten Systeme zeigen die wichtigsten Informationen des eigenen und der fremden Flugzeuge an. Diese im militärischen Bereich etablierten und vielgenutzten Systeme haben auch im zivilen Bereich, insbesondere im Automobilbereich, viele Anwendungsmöglichkeiten. So können Daten zur Geschwindigkeit, der Abstand zum vorausfahrenden Fahrzeug oder Richtungsangaben des Navigationsgerätes direkt auf Augenhöhe des Fahrers angezeigt werden. Diese Möglichkeiten verbessern deutlich die Verkehrssicherheit des Fahrzeuges, da der Fahrer beim Blick auf die Instrumente die Verkehrslage und -situation nicht beobachten kann. Bei erhöhten Geschwindigkeiten des Fahrzeugs, beispielsweise auf der Autobahn, kann der "blind" zurückgelegte Fahrzeugweg beträchtlich sein und eine erhöhte Unfallgefahr bedingen.

Werden Head-Up-Displays (HUD) von einer externen Lichtquelle, wie beispielsweise von einem Laser beleuchtet, so sind die Leuchtfelder in Abhängigkeit von den herrschenden Licht- und Witterungsverhältnissen nur schwer zu erkennen. Starkes Sonnenlicht und Lichtreflexion durch Wassertropfen erschweren das Erkennen der im Head-Up-Display projizierten Informationen deutlich.

DE 603 14 613 T2 offenbart eine photochrome Zusammensetzung und ein Verfahren zu ihrer Herstellung. Die Zusammensetzung enthält ein lineares, vernetzbares Polyurethan oder Polyurethan-Harnstoff Polymer und eine photochrome organische Verbindung.

WO 2004/099172 A1 offenbart eine photochrome Zusammensetzung auf benzol-, naphthen- und phenathrochromer Struktur substituiert mit einer Arylaminegruppe.

US 7,230,767 B2 offenbart ein Bildschirmsystem in einer Fahrzeugscheibe. Die Anordnung enthält lumineszierende Verbindungen auf der nach außengerichteten Seite der Innenscheibe. Über eine Leuchtquelle werden die lumineszierenden Verbindungen angeleuchtet und erscheinen im Blickfeld eines Autofahrers.

Die Aufgabe der Erfindung liegt darin, eine Verbundglasscheibe bereitzustellen, die als Head-Up-Display genutzt werden kann und auch bei hellen Sichtverhältnissen eine gute Erkennbarkeit sowie hohe Leuchtkraft der projizierten Piktogramme, Zahlen und Schriftzeichen ermöglicht.

Die Aufgabe der vorliegenden Erfindung wird erfindungsgemäß durch eine Verbundglasscheibe, eine Vorrichtung, ein Verfahren zu deren Herstellung und deren Verwendung nach den unabhängigen Ansprüchen 1, 11, 13 und 15 gelöst. Bevorzugte Ausführungen gehen aus den Unteransprüchen hervor.

Die erfindungsgemäße Verbundglasscheibe umfasst mindestens eine obere Scheibe, eine untere Scheibe und mindestens eine polymere Schicht. Die Scheiben enthalten bevorzugt Flachglas (Floatglas), Quarzglas, Borosilikatglas, Kalk-Natron-Glas. Die Scheiben weisen bevorzugt eine mittlere Lichttransmission (wenn nicht anders spezifiziert als Lichttransmission für die Lichtart A und einem 2° - Normalbeobachter nach DIN 5033 für Licht der Wellenlängen von 380 nm bis 780 nm) von mehr als 80 %, bevorzugt mehr als 90 % auf. Die Scheiben weisen bevorzugt eine Lichttransmission von > 70 %, besonders bevorzugt 75 % im Wellenlängenbereich von 360 nm bis 420 nm auf.

Die Zwischenschicht enthält mindestens ein lumineszierendes Pigment und eine PVB (Polyvinylbutyral)-Folie. Die lumineszierenden Pigmente sind bevorzugt im gesamten Folienvolumen enthalten. Lumineszierende Pigmente enthalten im Sinne der Erfindung organische und/oder anorganische chromophore oder lumineszierende Verbindungen, Ionen, Aggregate und/oder Moleküle. Lumineszenz beinhaltet Fluoreszenz und/oder Phosphoreszenzprozesse, daher die Anregung mit elektromagnetischer Strahlung und die Emission elektromagnetischer Strahlung. Die emittierte Strahlung weist bevorzugt eine andere Wellenlänge als die anregende Strahlung auf. Die emittierte Strahlung weist bevorzugt eine höhere Wellenlänge auf.

Die PVB-Folie weist eine Lichttransmission von >70 %, bevorzugt > 82 % gemessen bei einer Wellenlänge von 405 nm auf. Die Lichttransmission der PVB-Folie kann über Foliendicke, Polymerzusammensetzung, Polymerisierungrad, Polymerisierungsverteilung, UV-Blocker oder Weichmacher eingestellt werden. Die erfindungsgemäße PVB-Folie eimöglicht eine nur geringe Schwächung der anregenden und emittierten elektromagnetischen Strahlung und somit eine hohe Leuchtkraft des Head-Up-Displays.

Die PVB-Folie weist bevorzugt eine Lichttransmission von > 50 %, bevorzugt > 60 %, besonders bevorzugt >70 % gemessen bei einer Wellenlänge von 375 nm auf.

Die PVB-Folie weist bevorzugt eine Lichttransmission von > 75 %, bevorzugt > 82 % im Wellenlängenbereich von 390 nm bis 410 nm auf.

Die Zwischenschicht enthält bevorzugt PET (Polyethylenterephthalat), PVC (Polyvinylchlorid), PU (Polyurethan), EVA (Poly-Ethylvinylacetat) und Mischungen sowie Copolymere davon.

Die Zwischenschicht enthält bevorzugt keine im Bereich des Anregungsspektrums der fluoreszierenden Partikel zwischen 360 nm und 400 nm wirksamen UV-Blocker. Die erfindungsgemäßen lumineszierenden Pigmente wirken bevorzugt als UV-Blocker.

Das lumineszierende Pigment weist bevorzugt ein lokales Anregungsmaximum im Bereich von 350 nm bis 450 nm, besonders bevorzugt 390 nm bis 420 nm auf. In diesem Bereich werden gute Ergebnisse erzielt.

Das lumineszierende Pigment weist bevorzugt ein lokales Emissionsmaximum im Bereich von 400 nm bis 800 nm, besonders bevorzugt 430 nm bis 500 nm auf. In diesem Bereich werden gute Ergebnisse erzielt.

Die Zwischenschicht weist bevorzugt eine Dicke von 0,30 mm bis 0,9 mm, bevorzugt 0,50 mm bis 0,80 mm auf. In diesem Bereich für die Schichtdicke werden gute Ergebnisse erzielt.

Das lumineszierende Pigment enthält ein Hydroxyalkylterephthalat mit der Formel: R₁-COO-P(OH)x(0-4)-COO-R₂, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen. Die allgemeine Strukturformel ist:

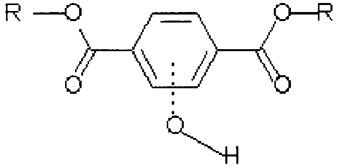

Das lumineszierende Pigment enthält bevorzugt Diethyl-2,5-dihydroxyterephthalat. Die Strukturformel ist:

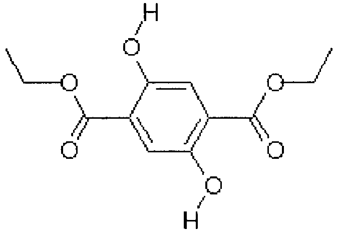

Das lumineszierende Pigment enthält bevorzugt Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphathalsäurederivate, Oxazole, Stilbene, Styryle, Perylene, Lanthanoide, bevorzugt Y₂O₃:Eu, YVO₄:Tm, Y₂O₂S:Pr, Gd₂O₂S:Tb und/oder Gemische davon.

Das lumineszierende Pigment enthält zusätzlich bevorzugt als Lösungsmittel Alkohole, Ketone, Ester, Amine, Amide und/oder Gemische davon. Das lumineszierende Pigment enthält zusätzlich besonders bevorzugt Ethanol, Tetrahydrofuran und/oder Benzylalkohol.

Die Zwischenschicht enthält bevorzugt 0,1 g/m² bis 15g/m² lumineszierendes Pigment. Die Mengenangaben beziehen sich auf eine Dicke der Zwischenschicht von etwa 0,76 mm. In diesem Bereich werden gute Ergebnisse erzielt.

Die obere Scheibe und/oder untere Scheibe weisen bevorzugt eine Dicke von 1 mm bis 4 mm, besonders bevorzugt 1,4 mm bis 2,5 mm auf. Die obere Scheibe und die untere Scheibe können unterschiedliche Dicken aufweisen.

Die obere Scheibe und/oder untere Scheibe weisen bevorzugt eine Tönung und/oder Beschichtung auf. Die Tönung und/oder Beschichtung können den Kontrast des projizierten Bildes verstärken und die lumineszierenden Pigmente vor Alterung schützen. Die obere, nach außen gewandte Scheibe enthält bevorzugt eine Tönung und/oder Beschichtung und die untere, nach innen zur Leuchtquelle gewandte Scheibe keine Tönung und/oder Beschichtung.

Die Erfindung umfasst des Weiteren eine Vorrichtung zum Anzeigen eines Piktogramms, Zahlen und Schriftzeichen. Die Vorrichtung umfasst eine wie oben beschriebene Verbundalasscheibe und eine auf die Verbundglasscheibe gerichtete Leuchtquelle. Die Leuchtquelle emittiert elektromagnetische Strahlung der Wellenlänge von 360 nm bis 420 nm. Die von der Leuchtquelle emittierte Strahlung wird von den lumineszierenden Pigmenten in der Zwischenschicht absorbiert und mit veränderter Wellenlänge wieder emittiert. Diese emittierte Strahlung wird vom Betrachter als Bildpunkt auf der Scheibe wahrgenommen. Die Leuchtquelle umfasst bevorzugt einen Diodenlaser.

Die Erfindung umfasst des Weiteren ein Verfahren zur Herstellung einer Verbundglasscheibe. Das Verfahren umfasst in einem ersten Schritt das Auftragen eines lumineszierenden Pigments auf einer PVB-Folie, die im folgenden Schritt zwischen einer oberen Scheibe und einer unteren Scheibe laminiert werden. Das Laminieren erfolgt bevorzugt bei Temperaturen von 120 °C bis 170 °C, einem Druck von 10 bar bis 15 bar und für einen Zeitraum von 30 min bis 240 min. Beim Laminieren verteilen sich die lumineszierenden Pigmente bevorzugt gleichmäßig in der gesamten PVB-Folie.

Das lumineszierende Pigment wird bevorzugt über Aufsprühen, Siebdruck, Offsetdruck, Tintenstrahldruck und/oder Flexodruck aufgetragen.

Die Erfindung umfasst des Weiteren die Verwendung der Verbundglasscheibe als transparente oder semi-transparente Anzeigesysteme, Head-Up-Display in Gebäuden, Fahrzeugen, Flugzeugen und/oder Hubschraubern, besonders bevorzugt als Windschutzscheiben in Fahrzeugen.

Im Folgenden wird die Erfindung anhand von Zeichnungen und eines Ausführungs- sowie Vergleichsbeispiels näher erläutert. Die Zeichnungen sind rein schematische Darstellungen und nicht maßstabsgetreu. Sie schränken die Erfindung in keiner Weise ein.

Es zeigen:
Figur 1 einen Querschnitt der erfindungsgemäßen Verbundglasscheibe,
Figur 2 einen Querschnitt der Zwischenschicht und
Figur 3 einen Querschnitt der erfindungsgemäßen Vorrichtung.

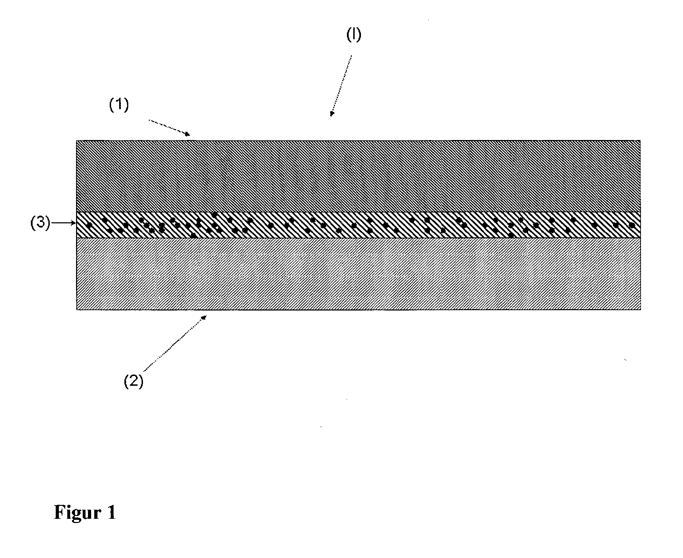

Figur 1 zeigt einen Querschnitt der erfindungsgemäßen Verbundglasscheibe (I) aus oberer Scheibe (1), Zwischenschicht (3) und unterer Scheibe (2).

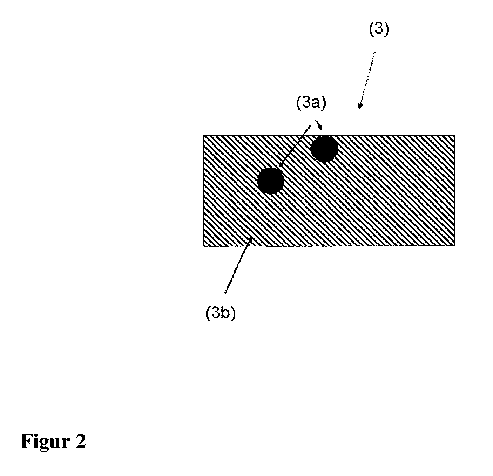

Figur 2 zeigt eine vergrößerte Darstellung der Zwischenschicht (3) aus PVB-Folie (3b) und in stark vergrößerter Darstellung lumineszierende Pigmente (3a). Die lumineszierenden Pigmente (3a) sind bevorzugt im gesamten Folienvolumen (3) statistisch verteilt.

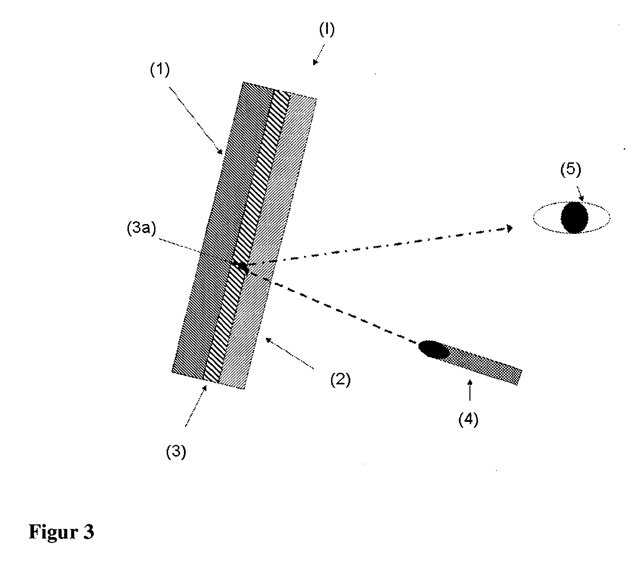

Figur 3 zeigt einen Querschnitt der erfindungsgemäßen Vorrichtung. Die Verbundglasscheibe (I) aus oberer Scheibe (1), Zwischenschicht (3) und unterer Scheibe (2) wird von einer Leuchtquelle (4), bevorzugt einem Diodenlaser, angestrahlt. Die in der Zwischenschicht befindlichen lumineszierenden Pigmente (3a) emittieren Licht, welches vom Betrachter als Signal oder Piktogramm wahrgenommen wird.

Im Folgenden wird die Erfindung anhand eines Beispiels und eines Vergleichsbeispiels näher erläutert.

In zwei Versuchsreihen wurden zwei verschiedene PVB-Folien (3b) mit einem lumineszierenden Pigment (3a) beispielsweise per Siebdruckverfahren bedruckt und anschließend die Leuchtkraft als Emission in einem Fluoreszenzspektrometer bestimmt.

### Beispiel 1 (erfindungsgemäß)

Eine PVB-Folie AG21 (3b) (Solutia, Gent, Belgien) mit einer Dicke von 0,51 mm wird mit Diethyl-2,5-dihydroxyterephtalat (3a) in Ethanol bedruckt. Die Konzentration von Diethyl-2,5-dihydroxyterephtalat in der PVB-Folie beträgt 3 g/m². Die Lichttransmission der unbedruckten PVB-Folie ohne lumeszierendes Pigment beträgt 86,4 % bei 405 nm, gemessen an einem Verbundglas bestehend aus 2x2.1mm Klarglas.

### Beispiel 2 (Vergleichsbeispiel)

Eine PVB-Folie RF41 (3b) (Solutia, Gent, Belgien) mit einer Dicke von 0,76 mm wird mit Diethyl-2,5-dihydroxyterephtalat (3a) in Ethanol bedruckt. Die Konzentration von Diethyl-2,5-dihydroxyterephtalat in der PVB-Folie beträgt 3 g/m². Die Lichttransmission der unbedruckten PVB-Folie ohne lumeszierendes Pigment beträgt 54,6 % bei 405 nm, gemessen an einem Verbundglas bestehend aus 2x2.1mm Klarglas.

Die bedruckten PVB-Folien wurden in einem Fluoreszensspektrometer (Perkin Elmer) einer Anregungswellenlänge von 405 nm ausgesetzt. Gemessen wurde die Intensität der emittierten Strahlung im Emissionsmaximum bei 448 nm. Die Ergebnisse sind in Tabelle 1 zusammengefasst. In einem zweiten Versuch wurde die Leuchtdichte mit einer Lumi CAM 4.0 /1300 Color (Instrument Systems, 81673 München, Deutschland) bestimmt.

| Beispiel | Emission [A.U.] | Leuchtdichte [cd/m²] |
|---|---|---|
| 1 (Erfindungsgemäß) | 690 | 436 |
| 2 (Vergleichsbeispiel) | 780 | 527 |

Die Emission des erfindungsgemäßen Beispiels 1 ist um 11,5 % höher als im Vergleichsbeispiel 2. Die Leuchtdichte des erfindungsgemäßen Beispiels ist um 20 % höher als im Vergleichsbeispiel. Diese Ergebnisse waren überraschend und unerwartet.

### Bezugszeichenliste

Es zeigen
(1) obere Scheibe,
(2) untere Scheibe,
(3) Zwischenschicht,
(3a) lumineszierendes Pigment,
(3b) PVB-Folie,
(4) Leuchtquelle,
(5) Betrachter und
(I) erfindungsgemäße Verbundglasscheibe.

## Patentansprüche

1. Verbundglasscheibe mindestens umfassend
a. eine obere Scheibe (1),
b. eine untere Scheibe (2) und
c. eine Zwischenschicht (3) zwischen der oberen Scheibe (1) und der unteren Scheibe (2), wobei die Zwischenschicht (3) mindestens ein lumineszierendes Pigment (3a) und eine PVB-Folie (3b) enthält, wobei die PVB-Folie (3b) eine Lichttransmission von > 70 %, gemessen bei einer Wellenlänge von 405 nm aufweist und wobei das lumineszierende Pigment (3a) ein Hydroxyalkylterephthalat mit der Formel: R₁-COO-P(OH)x(0-4)-COO-R₂ enthält, wobei R₁, R₂ ein Allkyl- oder Allylrest mit 1 bis 10 C Atomen ist, P ein Phenylring, OH am Phenylring gebundene Hydroxylgruppen sind und x die Anzahl der am Phenylring gebundenen Hydroxylgruppen ist.

2. Verbundglasscheibe nach Anspruch 1, wobei die PVB-Folie (3b) eine Lichttransmission von > 50 %, bevorzugt > 60 %, gemessen bei einer Wellenlänge von 375 nm aufweist.

3. Verbundglasscheibe nach Anspruch 1 oder 2, wobei die Zwischenschicht (3) keine UV-Blocker enthält.

4. Verbundglasscheibe nach einem der Ansprüche 1 bis 3, wobei das lumineszierende Pigment (3a) ein Anregungsmaximum im Bereich von 350 nm bis 450 nm, bevorzugt 390 nm bis 420 nm aufweist.

5. Verbundglasscheibe nach einem der Ansprüche 1 bis 4, wobei das lumineszierende Pigment (3a) ein Emissionsmaximum im Bereich von 400 nm bis 800 nm, bevorzugt 430 nm bis 500 nm aufweist.

6. Verbundglasscheibe nach einem der Ansprüche 1 bis 5, wobei die Zwischenschicht (3) eine Dicke von 0,30 mm bis 0,9 mm, bevorzugt 0,50 mm bis 0,80 mm aufweist.

7. Verbundglasscheibe nach einem der Ansprüche 1 bis 6, wobei das lumineszierende Pigment (3a) Diethyl-2,5-dihydroxyterephthalat enthält.

8. Verbundglasscheibe nach einem der Ansprüche 1 bis 7, wobei das lumineszierende Pigment (3a), Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphathalsäurederivate, Oxazole, Stilbene, Styryle, Perylene, Lanthanoide, bevorzugt Y₂O₃:Eu, YVO₄:Tm, Y₂O₂S:Pr, Gd₂O₂S:Tb und/oder Gemische davon enthält.

9. Verbundglasscheibe nach einem der Ansprüche 1 bis 8, wobei die Zwischenschicht 0,1 g/m² bis 15g/m² mindestens eines lumineszierenden Pigments (3a) enthält.

10. Verbundglasscheibe nach einem der Ansprüche 1 bis 9, wobei die obere Scheibe (1) und/oder untere Scheibe (2) eine Tönung und/oder Beschichtung aufweisen.

11. Vorrichtung zum Anzeigen eines Piktogramms, Schriftzeichen und/oder Zahlen umfassend eine Verbundglasscheibe nach den Ansprüchen 1 bis 10 und eine auf die Verbundglasscheibe gerichtete Leuchtquelle (4), wobei die Leuchtquelle (4) elektromagnetische Strahlung der Wellenlänge von 380 nm bis 420 nm auf die Verbundglasscheibe emittiert.

12. Vorrichtung nach Anspruch 11, wobei die Leuchtquelle (4) einen Diodenlaser umfasst.

13. Verfahren zur Herstellung einer Verbundglasscheibe, wobei
a. ein lumineszierendes Pigment (3a) auf einer PVB-Folie (3b) aufgetragen wird und
b. das lumineszierende Pigment (3a) auf der PVB-Folie (3b) zwischen eine obere Scheibe (1) und eine untere Scheibe (2) gelegt und laminiert wird, wobei eine Zwischenschicht (3) erhalten wird.

14. Verfahren nach Anspruch 13, wobei das lumineszierende Pigment (3a) über Aufsprühen, Siebdruck, Offsetdruck, Tintenstrahldruck und/oder Flexodruck auf die PVB-Folie (3b) aufgetragen wird.

15. Verwendung der Verbundglasscheibe nach einem der Ansprüche 1 bis 10 als Head-Up-Display in Gebäuden, Fahrzeugen, Flugzeugen und/oder Hubschraubern, bevorzugt als Windschutzscheiben in Fahrzeugen.

## Claims

1. Composite glass pane comprising at least
a. an upper pane (1),
b. a lower pane (2), and
c. an intermediate layer (3) between the upper pane (1) and the lower pane (2), wherein the intermediate layer (3) comprises at least one luminescent pigment (3a) and one PVB film (3b), wherein the PVB film (3b) has light transmission of > 70 %, measured at a wavelength of 405 nm, and wherein the luminescent pigment (3a) contains a hydroxyalkyl terephthalate having the formula: R₁-COO-P(OH)x(O-4)-COO-R₂, where R₁, R₂ is an alkyl or allyl radical having 1 to 10 C atoms, P is a phenyl ring, OH is hydroxyl groups bonded to the phenyl ring, and x is the number of hydroxyl groups bonded to the phenyl ring.

2. Composite glass pane according to claim 1, wherein the PVB film (3b) has light transmission of > 50 %, preferably > 60 %, measured at a wavelength of 375 nm.

3. Composite glass pane according to claim 1 or 2, wherein the intermediate layer (3) contains no UV blockers.

4. Composite glass pane according to one of claims 1 to 3, wherein the luminescent pigment (3a) has an excitation maximum in the range from 350 nm to 450 nm, preferably 390 nm to 420 nm.

5. Composite glass pane according to one of claims 1 through 4, wherein the luminescent pigment (3a) has an emission maximum in the range from 400 nm to 800 nm, preferably 430 nm to 500 nm.

6. Composite glass pane according to one of claims 1 through 5, wherein the intermediate layer (3) has a thickness of 0.30 mm to 0.9 mm, preferably 0.50 mm to 0.80 mm.

7. Composite glass pane according to one of claims 1 through 6, wherein the luminescent pigment (3a) contains diethyl 2,5-dihydroxyterephthalate.

8. Composite glass pane according to one of claims 1 through 7, wherein the luminescent pigment (3a) contains benzopyranes, naphthopyranes, 2H-naphthopyranes, 3H-naphthopyranes, 2H-phenanthropyranes, 3H-phenanthropyranes, photochromic resins, coumarins, xanthines, naphthalic acid derivatives, oxazoles, stilbenes, styryls, perylenes, lanthanides, preferably Y₂O₃:Eu, YVO₄:Tm, Y₂O₂S:Pr, Gd₂O₂S:Tb, and/or mixtures thereof.

9. Composite glass pane according to one of claims 1 through 8, wherein the intermediate layer contains 0.1 g/m² to 15g/m² of at least one luminescent pigment (3a).

10. Composite glass pane according to one of claims 1 through 9, wherein the upper pane (1) and/or lower pane (2) have tinting and/or coating.

11. Device for the display of a pictogram, graphic characters, and/or numbers comprising a composite glass pane according to claims 1 through 10 and a light source (4) aimed at the composite glass pane, wherein the light source (4) emits electromagnetic radiation of the wavelength from 380 nm to 420 nm onto the composite glass pane.

12. Device according to claim 11, wherein the light source (4) comprises a diode laser.

13. Method for the production of a composite glass pane, wherein
a. a luminescent pigment (3a) is applied on a PVB film (3b) and
b. the luminescent pigment (3a) on the PVB film (3b) is placed between an upper pane (1) and a lower pane (2) and laminated, with an intermediate layer (3) being obtained.

14. Method according to claim 13, wherein the luminescent pigment (3a) is applied on the PVB film (3b) by spraying, screen printing, offset printing, ink jet printing, and/or flexographic printing.

15. Use of the composite glass pane according to one of claims 1 through 10 as a head-up display in buildings, motor vehicles, airplanes, and/or helicopters, preferably as windshields in motor vehicles.

## Revendications

1. Vitre composite comprenant au moins
a. une vitre supérieure (1) ;
b. une vitre inférieure (2) ; et
c. une vitre intermédiaire (3) entre la vitre supérieure (1) et la vitre inférieure (2), la vitre intermédiaire (3) contenant au moins un pigment luminescent (3a) et un film de PVB (3b), le film de PVB (3b) présentant une transmission lumineuse de > 70 %, mesurée à une longueur d'onde de 405 nm, et le pigment luminescent (3a) contenant un hydroxyalkyltéréphtalate ayant la formule : R₁-COO-P(OH)ₓ(0-4)-COOR₂, dans laquelle R₁, R₂ est un reste alkyle ou alkyle ayant 1 à 10 atomes de C, P est un noyau phényle, OH représente des groupes hydroxyle liés au noyau phényle et x est le nombre des groupes hydroxyle liés au noyau phényle.

2. Vitre composite selon la revendication 1, dans laquelle le film de PVB (3b) présente une transmission lumineuse de > 50 %, de préférence > 60 %, mesurée à une longueur d'onde de 375 nm.

3. Vitre composite selon l'une des revendications 1 ou 2, dans laquelle la couche intermédiaire (3) ne contient pas d'agents bloquant le rayonnement UV.

4. Vitre composite selon l'une des revendications 1 à 3, dans laquelle le pigment luminescent (3a) présente un maximum d'excitation dans la plage de 350 nm à 450 nm, de préférence de 390 nm à 420 nm.

5. Vitre composite selon l'une des revendications 1 à 4, dans laquelle le pigment luminescent (3a) présente un maximum d'émission dans la plage de 400 nm à 800 nm, de préférence, de 430 nm à 500 nm.

6. Vitre composite selon l'une des revendications 1 à 5, dans laquelle la couche intermédiaire (3) présente une épaisseur de 0,30 mm à 0,9 mm, de préférence de 0,50 mm à 0,80 mm.

7. Vitre composite selon l'une des revendications 1 à 6, dans laquelle le pigment luminescent (3a) contient du 2-5-dihydroxytéréphtalate de diéthyle.

8. Vitre composite selon l'une des revendications 1 à 7, dans laquelle le pigment luminescent (3a) contient du benzopyrane, du naphtopyrane, du 2H-naphtopyrane, du 3H-naphtopyrane, du 2H-phénanthropyrane, du 3H-phénantropyrane, des résines photochromiques, de la coumarine, de la xanthine, des dérivés de l'acide naphtalique, des oxazoles, des stilbènes, des styryles, des pérylènes, des lanthanoïdes, de préférence Y₂O₃:Eu, YVO₄:Tm, Y₂O₂S:Pr, Gd₂O₂S:Tb et/ou leurs mélanges.

9. Vitre composite selon l'une des revendications 1 à 8, dans laquelle la couche intermédiaire contient un 0,1 g/m2 à 15 g/m2 d'au moins un pigment luminescent (3a).

10. Vitre composite selon l'une des revendications 1 à 9, dans laquelle la vitre supérieure (1) et/ou la vitre inférieure (2) présente(nt) une teinte et/ou une enduction.

11. Dispositif pour un afficher un pictogramme, des caractères et/ou des chiffres, comprenant une vitre composite selon l'une des revendications 1 à 10, et une source lumineuse (4) dirigée vers la vitre composite, la source lumineuse (4) émettant un rayonnement électromagnétique d'une longueur d'onde de 380 nm à 420 nm sur la vitre composite.

12. Dispositif selon la revendication 11, dans lequel la source lumineuse (4) comprend une diode laser.

13. Procédé de fabrication d'une glace composite suivant lequel :
a. un pigment luminescent (3a) est déposé sur un film de PVB (3b) ; et
b. le pigment luminescent (3a) est déposé sur le film de PVB (3b) entre une vitre supérieure (1) et une vitre inférieure (2) et laminé, une couche intermédiaire (3) étant obtenue.

14. Procédé selon la revendication 13, dans lequel le pigment luminescent (3a) est déposé sur le film de PVB (3b) par pulvérisation, sérigraphie, impression offset, impression à jet d'encre et/ou flexographie.

15. Utilisation de la vitre composite selon l'une des revendications 1 à 10 comme affichage tête haute dans des bâtiments, véhicules, avions et/ou hélicoptères, de préférence comme pare-brises dans des véhicules.
